# DEMANDE DE BREVET EUROPEEN

(11) **EP 1 652 613 A2**
(43) Date de publication de la demande: **03.05.2006**
(21) Numéro de dépôt: 05300792.8
(22) Date de dépôt: 05.10.2005
(51) Int. Cl.: B23K 11/16, B23K 35/00

(54) **Procédé d'assemblage d'une pièce en acier et d'une pièce en fonte**

(30) Priorité: 29.10.2004 FR 0411617
(71) Demandeur: Peugeot Citroen Automobiles SA, 78943 Vélizy-Villacoublay Cedex (FR)
(72) Inventeur: RICHARD, Pierre, 25400, AUDINCOURT (FR); LANTERNIER, Christian, 69450, SAINT CYR AU MONT D'OR (FR); THIRIET, Gilles, 25700, VALENTIGNEY (FR)

(57) **Abrégé**

Procédé d'assemblage par soudage d'une pièce en acier (1) et d'une pièce en fonte (4), selon lequel on dispose, entre la pièce en acier et la pièce en fonte, un insert (6) en alliage fer-nickel à forte teneur en nickel, et on effectue un soudage par résistance.
Application à des composants pour véhicules automobiles.

## Description

La présente invention est relative à l'assemblage par soudage d'une pièce en acier et d'une pièce en fonte.

Certains composants mécaniques sont constitués d'assemblage de pièces en acier d'une part, et de pièces en fonte d'autre part, en particulier en fonte ductile, notamment en fonte à graphite sphéroïdal, de façon à optimiser le comportement d'ensemble du composant.

Pour fabriquer de tels composants, il est intéressant de pouvoir souder ensemble des pièces en acier et des pièces en fonte. En particulier dans certaines industries comme l'industrie automobile, il est particulièrement intéressant de pouvoir souder ces pièces par soudage par résistance. Cependant du fait des différences de compositions importantes, et en particulier des différences de teneur de carbone, de l'acier et de la fonte, les assemblages par soudage par résistance d'une pièce en acier sur une pièce en fonte présentent l'inconvénient de ne pas avoir une résistance à la traction ou à la flexion très élevée. En général la résistance à la traction de tels assemblages est insuffisante.

Il est donc nécessaire de prévoir soit des conceptions de composants mécaniques différentes moins optimales, soit des techniques d'assemblage moins commodes et plus onéreuses que l'assemblage par soudage par résistance.

Le but de la présente invention est de remédier à cet inconvénient en proposant un moyen de fabriquer par soudage par résistance des composants mécaniques constitués d'assemblages de pièces d'acier et de pièces de fonte, tout en obtenant des liaisons entre les pièces en acier et les pièces en fonte ayant des résistances à la traction et à la flexion satisfaisantes.

A cet effet, l'invention a pour objet un procédé d'assemblage par soudage d'une pièce en acier et d'une pièce en fonte, selon lequel on dispose entre la pièce en acier et la pièce en fonte un insert en alliage fer-nickel à forte teneur en nickel, et on effectue un soudage par résistance. Pour cela, on peut appliquer la pièce en acier contre la pièce en fonte de façon à pincer l'insert, faire passer un courant électrique entre la pièce en acier et la pièce en fonte de façon à porter la zone de contact de la pièce en acier avec l'insert à une température voisine mais inférieure à la température de fusion de l'acier, et la zone de contact de la pièce en fonte avec l'insert à une température voisine mais inférieure à la température de fusion de la fonte, tout en exerçant une pression de serrage de l'insert, puis couper le courant électrique, effectuer un forgeage et laisser refroidir en maintenant la pression de serrage.

De préférence, la zone de contact de la pièce en acier avec l'insert comporte, à sa périphérie, un chanfrein, de façon à permettre une pénétration de la pièce en acier dans la pièce en fonte et une fusion plus rapide de l'acier.

Le courant électrique est par exemple un courant alternatif appliqué sous forme d'une succession de créneaux séparés par des pauses.

La pièce en acier peut être en acier faiblement ou moyennement allié contenant moins de 0,5% de carbone et moins de 8%, et de préférence moins de 5%, d'éléments d'alliage, et la pièce en fonte peut être en fonte GS (à graphite sphéroïdal), dont la composition comprend, de préférence, de 2,4% à 4% de carbone, de 0,9% à 3,5% de silicium et de 0,2% à 0,8% de manganèse.

De préférence, la composition chimique de l'insert en alliage fer-nickel comprend de 40% à 50% de nickel, de 40% à 50% de fer et de 5% à 15% de manganèse.

La pièce en acier et la pièce en fonte sont par exemple les constituants d'un composant de liaison au sol d'un véhicule automobile ou d'un composant du groupe motopropulseur d'un véhicule automobile.

L'invention concerne également un composant pour véhicule automobile qui comprend au moins une pièce en acier et au moins une pièce en fonte assemblées par soudage par résistance, dont la zone de liaison entre l'au moins une pièce en acier et l'au moins une pièce en fonte comprend une couche en alliage à forte teneur en nickel.

De préférence, la composition chimique de l'au moins une pièce en acier comprend moins de 0,5% de carbone et moins de 8% d'éléments d'alliage, l'au moins une pièce en fonte est en fonte GS dont la composition chimique comprend, de préférence, de 2,4% à 4% de carbone, de 0,9% à 3,5% de silicium et de 0,2% à 0,8% de manganèse, et la composition chimique de l'alliage à forte teneur en nickel comprend, de préférence, de 40% à 50% de nickel, de 40% à 50% de fer et de 5% à 15% de manganèse.

Le composant de véhicule automobile est, par exemple, un composant de liaison au sol ou un composant de groupe moteur.

L'invention va maintenant être décrite plus en détail mais de façon non limitative en regards des figures annexées, dans lesquelles :
- la figure 1 est une représentation schématique d'un procédé d'assemblage par soudage par résistance d'une barre en acier et d'une barre en fonte ;
- la figure 2 est une coupe micrographique avec un grossissement de 250 de la zone de liaison entre une pièce en acier et une pièce en fonte assemblées par soudage par résistance ;
- la figure 3 est une représentation schématique du cycle de soudage par résistance indiquant l'évolution d'une part du courant de chauffage, et d'autre part, des forces de pression exercées sur les pièces à souder.

D'une façon générale et selon l'invention, pour assembler par soudage par résistance une pièce en acier et une pièce en fonte à graphite sphéroïdal, on interpose entre la pièce en acier et la pièce en fonte, dans la zone qui sera destinée à assurer le soudage, un insert constitué d'une pièce découpée dans un feuillard ou dans un anneau en alliage à forte teneur en nickel. On effectue alors le soudage selon les modalités du soudage par résistance, c'est-à-dire que l'on amène les deux pièces à souder en contact de l'insert en alliage à forte teneur en nickel. On fait passer un courant électrique entre la pièce en acier et la pièce en fonte, tout en exerçant une force de serrage d'accostage, le courant électrique étant choisi de façon à ce que, dans la zone de la soudure, la pièce en acier soit portée à une température voisine de la température de fusion de l'acier, et la pièce en fonte soit portée à une température voisine de la température de fusion de la fonte. Lorsque les deux pièces ont atteint ces températures dans la zone à souder, on coupe le courant et on exerce une force de serrage sensiblement augmentée par rapport à la force de serrage d'accostage, pendant un temps court, de façon à effectuer une opération de forgeage.

Au cours du chauffage l'acier est chauffé à une température qui en général ne dépasse pas 1360°C, et la fonte a une température qui en général ne dépasse 1160°C.

Plus généralement, les températures d'échauffement des pièces dans les zones de soudage sont adaptées en fonction de la nature particulière des matériaux et des conditions particulières de soudage. L'homme du métier sait faire ces adaptations.

Au cours de l'opération de forgeage, la pièce en acier et la pièce en fonte adhèrent à l'insert en alliage à forte teneur en nickel et, éventuellement, la pièce en acier pénètre légèrement à l'intérieur de la pièce en fonte.

De façon à assurer une pénétration de la pièce en acier dans la pièce en fonte, ce qui est favorable à une bonne qualité de la soudure, on peut usiner sur la pièce en acier un chanfrein destiné à diminuer la surface de contact de la pièce en acier avec la pièce en fonte, et ainsi augmenter la pression de contact, pour favoriser une légère pénétration de la pièce en acier dans la pièce en fonte et favoriser la fusion de l'acier.

Les pièces en acier auxquelles le procédé est applicable sont notamment des pièces en acier constituées d'un acier de construction moyennement allié, ou d'un acier faiblement allié, c'est-à-dire d'un acier contenant moins de 0,5% de carbone et moins de 8%, ou moins de 5%, d'éléments d'alliage, respectivement. Les éléments d'alliage sont les éléments d'alliage des aciers de construction, connus de l'homme du métier. Sans que cette liste soit exhaustive, il s'agit en particulier du silicium, du manganèse, du nickel, du chrome, du molybdène, ou des éléments de micro-alliage tels que le Vanadium, le niobium, etc... ; Ces éléments peuvent également être désoxydants tels que l'aluminium etc... Outre, ces éléments, l'acier contient, de façon connue en elle-même, du fer et des impuretés résultant de l'élaboration.

Les pièces en fonte auxquelles le procédé est applicable sont, de préférence, en fonte à graphite sphéroïdal (fonte GS). Ces fontes sont connues en elle-même de l'homme du métier et comprennent, dans leur composition, principalement de 1,6% à 4,6% de carbone, et de préférence de 2,4% à 4% de carbone, de 0,9% à 3,5% de silicium, et de 0,2% à 0,8% de manganèse. Le reste de la composition est principalement du fer, éventuellement des éléments secondaire et des impuretés résultants des élaborations.

L'alliage à forte teneur en nickel utilisé pour l'insert est, de préférence, un alliage contenant principalement entre 40% et 50% de nickel, entre 40% et 50% de fer, et entre 5% et 15% de manganèse. Ce peut être, par exemple, un alliage dont la composition nominale contient principalement 44% de nickel, 45% de fer, 11% de manganèse. Pour un tel alliage, les teneurs réelles peuvent varier dans des fourchettes de plus ou moins 1% autour des valeurs nominales. En outre, la composition de ces alliages contient des éléments secondaires que l'homme du métier connaît et sait adapter, et éventuellement des impuretés résultant de l'élaboration.

L'insert est une pièce découpée dans un feuillard dont l'épaisseur peut être comprise par exemple entre 0,2 et 0,3 mm, mais dont l'homme de métier saura adapter l'épaisseur en fonction des conditions particulières de soudage.

A titre d'exemple, on a soudé un échantillon d'acier sur un échantillon de fonte, chaque échantillon étant constitué par une barre cylindrique ayant un diamètre de 15 mm, en utilisant le procédé selon l'invention.

Pour effectuer ce soudage, on a utilisé des éprouvettes de 100 mm de long, l'éprouvette en acier 1 comportant à son extrémité 2 destinée à être soudé, un chanfrein 3 à 45° avec un plat de 5 mm, l'éprouvette en fonte 4, comportant une extrémité 5 destinée à être soudée, droite. Les deux éprouvettes, l'éprouvette en acier 1 et l'éprouvette en fonte 4, ont été disposées dans des électrodes constituées chacune d'un manchon cylindrique en cuivre. Un premier manchon 7, contenant l'éprouvette d'acier 1, avait une longueur telle que l'éprouvette en acier débordait du manchon 7 d'une longueur L1 de 25 mm. Un deuxième manchon 8 contenant l'éprouvette en fonte 4, avait une longueur telle que l'éprouvette en fonte débordait du manchon d'une longueur L2 de 4 mm.

Les débordements, tant de l'éprouvette en acier que de l'éprouvette en fonte, étaient destinés à faire en sorte que, lors du passage du courant électrique entre l'éprouvette en acier et l'éprouvette en fonte, la tête de l'éprouvette en acier soit portée à une température voisine de 1360°C, et la tête de l'éprouvette en fonte soit portée à une température d'environ 1160°C.

Les deux manchons en cuivre 7 et 8 sont les supports d'éprouvette d'une machine d'essai de soudage dont le châssis n'est pas représenté. Ces deux manchons sont reliés à un générateur de courant électrique 9 qui peut faire passer un courant électrique entre l'éprouvette en acier et l'éprouvette en fonte. Dans cet exemple, le générateur est un générateur moyenne fréquence à 1.000 Hertz.

Les deux manchons en cuivre sont montés sur des supports qui permettent de les rapprocher l'un de l'autre et d'effectuer un serrage en exerçant des forces qui peuvent être régulées, comme l'indiquent les flèches F1 et F2.

Conformément au procédé selon l'invention, on a disposé entre la pièce en acier 1 et la pièce en fonte 4, dans la zone du soudage, un disque découpé dans un feuillard en alliage à forte teneur en nickel, d'épaisseur égale à 0,25 mm qui constitue un insert 6.

Dans cet essai, l'éprouvette était en acier de construction du type 20M5 (acier au manganèse contenant principalement 0,2% de carbone environ et 1,25% de manganèse environ).

L'éprouvette en fonte était en fonte GS du type GS400-12, c'est à dire comprenant dans sa composition entre 3,4% et 3,8% de carbone, entre 2,3% et 3% de silicium, moins de 0,7% de manganèse, moins de 0,02% de soufre et moins de 0,05% de phosphore et l'insert était en alliage à forte teneur en nickel contenant principalement environ 44% de nickel, environ 45% de fer et environ 11 % de manganèse (cet alliage contient également des éléments en faible quantité qui sont notamment des impuretés résultant de l'élaboration).

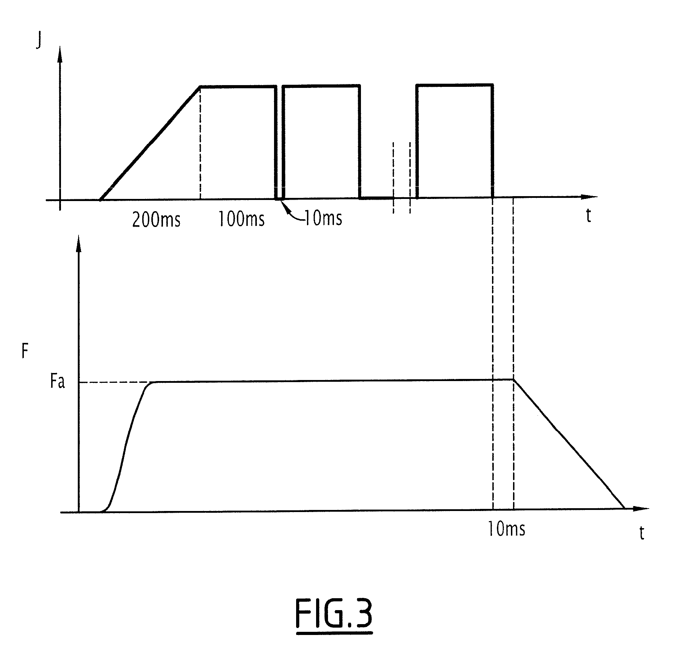

Pour effectuer le soudage, après avoir disposé l'insert entre l'éprouvette en acier et l'éprouvette en fonte, on a soumis l'ensemble à un courant électrique fourni par un générateur à moyenne fréquence produisant un courant électrique à la fréquence de 1000 Hz. Comme représenté à la figure 3, au moment de l'accostage de l'éprouvette en acier avec l'éprouvette en fonte, l'intensité du courant électrique est montée progressivement, en l'espace d'environ 20 millisecondes, jusqu'à sa valeur maximale définie, et la force de serrage qui est alors une force d'accostage est montée jusqu'à une valeur Fₐ. Puis on a soumis l'assemblage à un courant électrique selon un cycle constitué de créneaux d'environ 100 millisecondes pendant lesquels le courant électrique était à son intensité maximale, séparés par des périodes de repos d'une durée de 10 millisecondes pendant lesquelles le courant électrique était nul, tout en maintenant la force de serrage à la valeur Fₐ.

On a réalisé huit créneaux successifs puis le courant électrique a été coupé.

Lorsque le courant électrique a été coupé, on a maintenu la force de serrage de valeur Fₐ pendant une période de 10 millisecondes pour effectuer une opération de forgeage. Une fois ce forgeage effectué on a laissé refroidir l'ensemble et réduit progressivement la force de serrage.

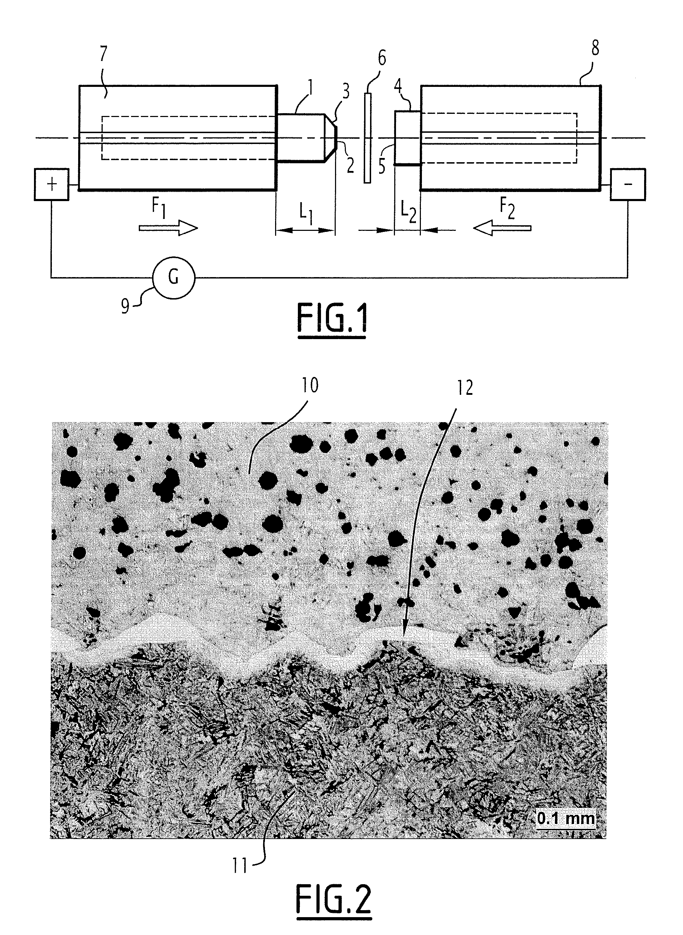

On a ainsi obtenu une zone soudée dont une coupe micrographique est représentée à la figure 2. Sur cette coupe micrographique, on voit que la fonte à graphite sphéroïdale 10 est séparée de l'acier 11 par une fine couche d'alliage à forte teneur en nickel 12, qui assure la liaison entre la fonte et l'acier.

En outre, on n'observe pas de fissure.

Cette assemblage a été soumis à des essais de résistance à la traction et à la flexion.

La rupture de l'assemblage a été observée, en traction, pour un effort de 4770 déca-Newton, et en flexion, pour un effort de 260 déca-Newton.

Ces caractéristiques de résistance de l'assemblage sont considérablement supérieures à celles qu'on obtient sans insert.

Ce procédé de soudage qui permet de réaliser des assemblages ayant de bonnes propriétés mécaniques, non seulement en compression mais également en traction, peut être utilisé pour fabriquer différents ensembles mécaniques, notamment pour l'industrie de véhicules automobiles, constitués d'assemblages de pièces en acier et de pièces en fonte, et ainsi d'obtenir des ensembles dont chacun des composants a des propriétés adaptées à son usage.

A titre d'exemple, on réalise ainsi des composants pour liaison au sol constitué par exemple de bras de suspension soudés sur des traverses, des supports de connexion soudés sur des bras, ou sur des pivots, ou sur des fusées.

On peut également réaliser des composants pour le groupe motopropulseur, et par exemple souder des gougeons en acier, ou plus généralement des supports de connexion, sur des blocs moteurs, par exemple sur des culasses en fonte.

Ces exemples ne sont pas limitatifs et l'homme du métier saura déterminer quels sont les assemblages mécaniques constitués de pièces en acier et de pièces en fonte pour lesquelles ces techniques d'assemblage par soudage par résistance avec un insert en alliage à forte teneur en nickel présentent un avantage particulier.

L'homme de métier saura aussi adapter au cas par cas les conditions particulières de réalisation de l'assemblage. Ainsi, il est possible de réaliser plusieurs cycles de créneaux d'intensité et de durée déterminées selon les dimensions des pièces à assembler.

## Revendications

1. Procédé d'assemblage par soudage d'une pièce en acier et d'une pièce en fonte, **caractérisé en ce qu'**on dispose, entre la pièce en acier (1) et la pièce en fonte (4), un insert (6) en alliage fer-nickel à forte teneur en nickel, et on effectue un soudage par résistance.

2. Procédé d'assemblage par soudage selon la revendication 1, **caractérisé en ce que** la zone de contact de la pièce en acier (1) avec l'insert (6) comporte, à sa périphérie, un chanfrein (3), de façon à permettre une pénétration de la pièce en acier dans la pièce en fonte.

3. Procédé d'assemblage par soudage selon la revendication 1 ou la revendication 2, **caractérisé en ce que** pour effectuer le soudage par résistance on fait passer entre la pièce en fonte et la pièce en acier un courant alternatif appliqué sous forme d'une succession de créneaux séparés par des pauses de façon à porter, dans la zone de soudage, la pièce en acier à une température voisine mais inférieure à la température de fusion de l'acier, et la pièce en fonte à une température voisine mais inférieure à la température de fusion de la fonte, puis on effectue un forgeage.

4. Procédé d'assemblage par soudage selon l'une quelconque des revendications 1 à 3, **caractérisé en ce que** la pièce en acier est en acier moyennement ou faiblement allié contenant moins de 0,5% de carbone et moins de 8%, et de préférence moins de 5%, d'éléments d'alliage, et **en ce que** la pièce en fonte est en fonte GS (à graphite sphéroïdal), dont la composition comprend, de préférence, de 2,4% à 4% de carbone, de 0,9% à 3,5% de silicium et de 0,2% à 0,8% de manganèse.

5. Procédé d'assemblage par soudage selon l'une quelconque des revendications 1 à 4, **caractérisé en ce que** la composition chimique de l'insert en alliage fer-nickel comprend principalement de 40% à 50% de nickel, de 40% à 50% de fer et de 5% à 15% de manganèse.

6. Procédé d'assemblage par soudage selon l'une quelconque des revendications 1 à 5, **caractérisé en ce que** la pièce en acier et la pièce en fonte sont les constituants d'un composant de liaison au sol d'un véhicule automobile ou d'un composant de groupe moto propulseur d'un véhicule automobile.

7. Composant de véhicule automobile, **caractérisé en ce qu'**il comprend au moins une pièce en acier et au moins une pièce en fonte assemblées par soudage par résistance, la zone de liaison entre l'au moins une pièce en acier et l'au moins une pièce en fonte comprenant une couche en alliage à forte teneur en nickel.

8. Composant pour véhicule automobile selon la revendication 7, **caractérisé en ce que** la composition chimique de l'au moins une pièce en acier comprend moins de 0,5% de carbone et moins de 8% d'éléments d'alliage, **en ce que** l'au moins une pièce en fonte est en fonte GS dont la composition chimique comprend, de préférence, de 2,4% à 4% de carbone, de 0,9% à 3,5% de silicium et de 0,2% à 0,8% de manganèse, et **en ce que** la composition chimique de l'alliage à forte teneur en nickel comprend, de préférence, de 40% à 50% de nickel, de 40% à 50% de fer et de 5% à 15% de manganèse.

9. Composant pour véhicule automobile selon la revendication 7 ou la revendication 8, **caractérisé en ce qu'**il est un composant de liaison au sol ou un composant de groupe moteur.
